# EUROPÄISCHE PATENTSCHRIFT

(11) **EP 3 018 490 B1**
(45) Veröffentlichungstag und Bekanntmachung des Hinweises auf die Patenterteilung: **11.11.2020**
(21) Anmeldenummer: 15184582.3
(22) Anmeldetag: 10.09.2015
(51) Int. Cl.: G01S 13/931, G01S 7/02, G01S 7/35, G01S 13/34

(54) **VERFAHREN ZUR DETEKTION EINER INTERFERENZ IN EINEM EMPFANGSSIGNAL EINES RADARSENSORS EINES KRAFTFAHRZEUGS, RECHENEINRICHTUNG, FAHRERASSISTENZSYSTEM, KRAFTFAHRZEUG SOWIE COMPUTERPROGRAMMPRODUKT**
METHOD FOR DETECTING INTERFERENCE IN A RECEIVED SIGNAL IN A RADAR SENSOR OF A MOTOR VEHICLE, COMPUTING DEVICE, DRIVER ASSISTANCE SYSTEM, MOTOR VEHICLE AND COMPUTER PROGRAM PRODUCT
PROCEDE DE DETECTION D'UNE INTERFERENCE DANS UN SIGNAL DE RECEPTION D'UN CAPTEUR RADAR D'UN VEHICULE AUTOMOBILE, DISPOSITIF DE CALCUL, SYSTEME D'ASSISTANCE A LA CONDUITE, VEHICULE AUTOMOBILE ET PRODUIT PROGRAMME INFORMATIQUE

(30) Priorität: 06.11.2014 DE 102014116165
(43) Veröffentlichungstag der Anmeldung: 11.05.2016
(73) Patentinhaber: Valeo Schalter und Sensoren GmbH, 74321 Bietigheim-Bissingen (DE)
(72) Erfinder: Ossowska, Alicja, 74321 Bietigheim-Bissingen (DE); Zhu, Hongfeng, 74321 Bietigheim-Bissingen (DE)
(74) Vertreter: Withopf, Kristina

(56) Entgegenhaltungen:
- DE-A1-102006 016 776
- DE-A1-102012 021 239
- US-A- 6 094 160

## Beschreibung

Die vorliegende Erfindung betrifft ein Verfahren zur Detektion einer Interferenz in einem Empfangssignal eines Radarsensors eines Kraftfahrzeugs mittels einer Recheneinrichtung, bei welchem eine Reihe von Abtastwerten ermittelt wird, wobei die Abtastwerte das mit einer vorbestimmten Abtastfrequenz abgetastete Empfangssignal charakterisieren, ein Fenster vorbestimmt wird, welches eine vorbestimmte Anzahl von Abtastwerten der Reihe umfasst und welches entlang der Reihe an unterschiedliche Positionen verschoben wird und an jeder Position des Fensters ein Detektionszyklus durchgeführt wird, bei dem ein Ähnlichkeitsmaß, welches eine Abweichung der Abtastwerte in dem Fenster zueinander beschreibt, bestimmt wird und für zumindest einen Abtastwert der Abtastwerte in dem Fenster anhand des Ähnlichkeitsmaßes festgelegt wird, ob dieser durch Interferenz beeinflusst ist. Die Erfindung betrifft außerdem ein Fahrerassistenzsystem für ein Kraftfahrzeug. Schließlicht betrifft die vorliegende Erfindung ein Kraftfahrzeug mit einem solchen Fahrerassistenzsystem.

Das Interesse richtet sich vorliegend auf Radarsensoren für Kraftfahrzeuge. Diese Radarsensoren werden beispielsweise bei einer Frequenz von ca. 24 GHz oder ca. 79 GHz betrieben. Die Radarsensoren dienen im Allgemeinen zur Detektion eines Objekts in einem Umgebungsbereich des Kraftfahrzeugs. Die Radarsensoren können Teil von unterschiedlichen Fahrerassistenzsystemen sein, die den Fahrer beim Führen des Kraftfahrzeugs unterstützen. Radarsensoren messen einerseits den Abstand zwischen dem Objekt und dem Kraftfahrzeug. Andererseits messen die Radarsensoren auch die Relativgeschwindigkeit zu dem Objekt. Ferner messen die Radarsensoren auch einen sogenannten Zielwinkel, also einen Winkel zwischen einer gedachten Verbindungslinie zu dem Objekt und einer Referenzlinie, etwa der Fahrzeuglängsachse.

Radarsensoren werden üblicherweise hinter dem Stoßfänger platziert, beispielsweise in den jeweiligen Eckbereichen des Stoßfängers. Zur Detektion des Zielobjekts sendet der Radarsensor ein Sendesignal in Form einer elektromagnetischen Welle aus. Dieses Sendesignal wird dann an dem zu detektierenden Objekt reflektiert und wird wieder von dem Radarsensor als Echo empfangen. Vorliegend gilt das Interesse insbesondere den sogenannten Frequenzmodulations-Dauerstrich-Radarsensoren, die auch als Frequency Modulated Continous Wave Radar oder als FMCW-Radar bezeichnet werden. Dabei umfasst das Sendesignal üblicherweise eine Sequenz von frequenzmodulierten Chirpsignalen, welche der Reihe nach ausgesendet werden. Zum Erhalten eines Empfangssignals wird das reflektierte Sendesignal dabei zunächst in das Basisband herabgemischt und anschließend mittels eines Analog-Digital-Wandlers abgetastet. Somit kann eine Reihe von Abtastwerten bereitgestellt werden. Diese Abtastwerte des Empfangssignals werden dann mittels einer elektronischen Recheneinrichtung verarbeitet. Diese Recheneinrichtung, die beispielsweise einen digitalen Signalprozessor umfasst, ist insbesondere in den Radarsensor integriert.

Mit dem Radarsensor wird üblicherweise in horizontaler Richtung ein relativ breiter azimutaler Winkelbereich erfasst, der beispielsweise 150° betragen kann. Der Radarsensor weist also einen relativ großen azimutalen Erfassungswinkel auf, so dass das Sichtfeld bzw. der Erfassungsbereich des Radarsensors in Azimutrichtung entsprechend breit ist. Dieser azimutale Erfassungsbereich kann in kleinere Teilbereiche unterteilt sein, welche der Reihe nach mittels des Radarsensors bestrahlt werden. Zu diesem Zweck wird beispielsweise die Hauptkeule der Sendeantenne elektronisch in Azimutrichtung verschwenkt, beispielsweise nach dem Phase-Array-Prinzip.

Bei einem solchen breiten azimutalen Erfassungsbereich des Radarsensors kann es sich als problematisch erweisen, dass der Radarsensor verschiedenen Interferenzen bzw. Interferenzsignalen ausgesetzt wird, welche aus unterschiedlichen Raumrichtungen stammen können und das Empfangssignal des Radarsensors verfälschen können. Das Empfangssignal des Radarsensors umfasst somit nicht nur das Nutzsignal, sondern auch eine Interferenz, welche gegebenenfalls die Detektion des Zielobjekts verfälschen kann. Eine derartige Referenz soll im Radarsensor detektiert und unterdrückt werden. Insbesondere soll die Interferenz vollständig aus dem Empfangssignal herausgefiltert werden.

Um die Interferenz in dem Empfangssignal besonders zuverlässig detektieren zu können, schlägt die DE 10 2012 021 239 A1 vor, zur Detektion der Interferenz innerhalb einer Untermenge von Abtastwerten eines Chirpsignals des Empfangssignals einen Parameterwert bzw. ein Ähnlichkeitsmaß zu bestimmen, welcher eine Abweichung der Abtastwerte der Untermenge voneinander charakterisiert. Abhängig von dem Parameterwert wird dann zumindest in Bezug auf einen der Abtastwerte der Untermenge festgestellt, ob dieser Abtastwert durch Interferenz beeinflusst ist oder nicht. Somit kann mit dem Parameterwert ein Maß für die Abweichung der Abtastwerte untereinander und somit ein Maß für die Streuung der Abtastwerte dieser Untermenge charakterisiert werden. Ein solcher Parameterwert ermöglicht somit einen eindeutigen Rückschluss auf die Interferenz innerhalb der untersuchten Untermenge von Abtastwerten.

Ferner beschreibt die US 7,187,321 B2 ein Verfahren zum Erfassen von Interferenz für einen Frequenzmodulations-Dauerstrich-Radarsensor. Hierbei wird ein Empfangssignal durch das Mischen des Sendesignals und des reflektierten Sendesignals erzeugt. Zudem wird eine maximale Frequenz in dem Empfangssignal bestimmt. Die Abtastfrequenz mit welcher das Empfangssignal abgetastet wird, wird in Abhängigkeit von der maximalen Frequenz angepasst.

DE 10 2006 016776 A1 offenbart ein Interferenzbestimmungsverfahren für FMCW Radare. Das Verfahren weist auf: Erzeugen eines Überlagerungssignals durch Mischen eines Sendesignals einer Radarwelle und eines empfangenen Signals einer reflektierten Welle, wobei das Sendesignal frequenzmoduliert ist, um sich linear zeitlich zu ändern, und das empfangene Signal die Radarwelle ist, die von einem Ziel reflektiert wird. Das Verfahren weist weiterhin auf: Abtasten des Überlagerungssignals, um abgetastete Daten zu erzeugen, Berechnen einer Änderung der abgetasteten Daten, und Bestimmen eines Auftretens einer Interferenz mit irgendeinem anderen Radar, wenn die Änderung einen im Voraus eingestellten oberen Grenzwert überschreitet.

US 6,094,160 A beschreibt ein Verfahren zur Interferenzabweisung im einem Kraftfahrzeugsystem mit einem nach vorne gerichteten Radarsensor, der möglicher Interferenz von anderen Radarsystemen ausgesetzt sein kann. Das Verfahren umfasst die Schritte: fortlaufendes Abtasten von Ausgabedaten des Radarsensors und Speichern der Abtastwerte in einem Datenarray, Berechnen einer Varianz der Abtastwerte, Assoziieren der Abtastwerte mit einer Störgröße aufgrund von Interferenz, wenn die berechnete Varianz einen Schwellwert überschreitet, begrenzen einer Untermenge des Arrays einschließlich der assoziierten Abtastwerte, Erzeugen einer Ersatzmenge von Datenabtastwerten, und Ersetzen der begrenzten Untermenge mit der Ersatzmenge der Datenabtastwerte.

DE 10 2012 021239 A1 betrifft ein Verfahren zur Detektion einer Interferenz in einem von einem Radarsensor eines Kraftfahrzeugs empfangenen Empfangssignal mittels einer elektronischen Recheneinrichtung des Kraftfahrzeugs. Zur Detektion eines Zielobjektes in einer Umgebung des Kraftfahrzeugs wird ein Sendesignal umfassend eine Sequenz von nacheinander folgenden frequenzmodulierten Chirpsignalen mittels des Radarsensors ausgesendet und ein an dem Zielobjekt reflektiertes Echosignal wird als Empfangssignal mit der überlagerten Interferenz empfangen. Nach Empfangen des Empfangssignals wird durch den Radarsensor die Interferenz in den Chirpsignalen des Empfangssignals detektiert. Zur Detektion der Interferenz innerhalb einer Untermenge von Abtastwerten eines Chirpsignals des Empfangssignals wird ein Parameterwert bestimmt, welcher eine Abweichung der Abtastwerte der Untermenge voneinander charakterisiert. Abhängig von dem Parameterwert wird zumindest in Bezug auf einen der Abtastwerte der Untermenge festgestellt, ob dieser Abtastwert durch Interferenz beeinflusst ist oder nicht.

Es ist Aufgabe der vorliegenden Erfindung, eine Lösung aufzuzeigen, wie eine Interferenz in einem Empfangssignal eines Radarsensors mit geringerem Rechenaufwand zuverlässiger erkannt werden kann.

Diese Aufgabe wird erfindungsgemäß durch ein Verfahren, durch Recheneinrichtung, durch ein Fahrerassistenzsystem, durch ein Kraftfahrzeug sowie durch ein Computerprogrammprodukt mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zur Detektion einer Interferenz in einem Empfangssignal eines Radarsensors eines Kraftfahrzeugs mittels einer Recheneinrichtung. Bei dem Verfahren wird eine Reihe von Abtastwerte ermittelt, wobei die Abtastwerte das mit einer vorbestimmten Abtastfrequenz abgetastete Empfangssignal charakterisieren. Ferner wird ein Fenster vorbestimmt, welches eine vorbestimmte Anzahl von Abtastwerten der Reihe umfasst und welches entlang der Reihe an unterschiedliche Positionen verschoben wird. An jeder Position des Fensters wird ein Detektionszyklus durchgeführt, bei dem ein Ähnlichkeitsmaß, welches eine Abweichung der Abtastwerte in dem Fenster zueinander beschreibt, bestimmt und für zumindest einen Abtastwert der Abtastwerte in dem Fenster wird anhand des Ähnlichkeitsmaßes festgelegt, ob dieser durch Interferenz beeinflusst ist. Dabei wird in einem Normalbetrieb der Recheneinrichtung das Fenster entlang der Reihe jeweils um zumindest zwei Abtastwerte verschoben.

Der vorliegenden Erfindung liegt die Erkenntnis zugrunde, dass es zum Detektieren der Interferenz in dem Empfangssignal des Radarsensors oftmals nicht notwendig ist, jeden der Abtastwerte zu überprüfen. Insbesondere kann es nicht erforderlich sein, dass das Ähnlichkeitsmaß, welches eine lokale Varianz der Abtastwerte beschreibt, für jeden der Abtastwerte bestimmt wird. Der Erfindung liegt ferner die Erkenntnis zu Grunde, dass bei Radarsensoren gemäß dem Stand der Technik die Abtastfrequenz üblicherweise so gewählt wird, dass eine Überabtastung vorliegt. Des Weiteren wird berücksichtigt, dass die Recheneinrichtung, mit welcher anhand von den erfassten Abtastwerten die Interferenz in dem Empfangssignal erkannt wird, üblicherweise eine begrenzte Rechenleistung aufweist. Die Recheneinrichtung kann beispielsweise einen entsprechenden digitalen Signalprozessor (DSP) aufweisen und direkt in dem Radarsensor integriert sein. Eine derartige Recheneinrichtung weist üblicherweise genug Rechenleistung auf, um die Auswertung aller Abtastwerte in der benötigten Zeit durchzuführen. Dies ist insbesondere darin begründet, dass die Detektion der Interferenz des Empfangssignals durchgehend im Betrieb des Radarsensors detektiert wird. Durch das erfindungsgemäße Verfahren kann der Rechenaufwand deutlich reduziert werden und zudem die Interferenz in dem Empfangssignal zuverlässig erkannt werden.

Die Interferenz wird in dem Empfangssignal des Radarsensors detektiert. Hierzu wird von dem Radarsensor ein Sendesignal ausgesendet, welches von dem zu detektierenden Objekt in der Umgebung des Kraftfahrzeugs reflektiert wird. Das Sendesignal kann beispielsweise eine Sequenz von nacheinander folgenden frequenzmodulierten Chirpsignalen umfassen. Das reflektierte Sendesignal trifft wiederum auf den Radarsensor und kann beispielsweise mit einer Antenne des Radarsensors empfangen werden. Zum Bereitstellen des Empfangssignals kann das von dem Objekt reflektierte Signal mit dem ausgesendeten Sendesignal gemischt werden. Das Empfangssignal kann mit einem entsprechenden Analog-Digital-Wandler mit einer vorbestimmten Abtastfrequenz abgetastet werden. Durch die Abtastung wird eine Reihe von Abtastwerten bereitgestellt. Zudem wird ein Fenster definiert, das eine vorbestimmte Anzahl von Abtastwerten beinhaltet. Durch das Fenster kann also eine Untermenge der Abtastwerte ausgewählt werden. Dieses Fenster wird zur Detektion der Interferenz entlang der Reihe von Abtastwerten verschoben. Das Fenster nimmt zu aufeinanderfolgenden Zeitpunkten unterschiedliche Positionen entlang der Reihe von Abtastwerten ein. An jeder der Positionen wird ein Detektionszyklus durchgeführt. In dem Detektionszyklus wird ein Ähnlichkeitsmaß bestimmt, welches eine Abweichung der Abtastwerte in dem Fenster zueinander beschreibt. Mit anderen Worten wird innerhalb des Fensters eine lokale Varianz der Abtastwerte bestimmt. Somit kann ein Maß für die Streuung der Abtastwerte innerhalb des Fensters bestimmt werden. Anhand des Ähnlichkeitsmaßes kann für zumindest einen der Abtastwerte in dem Fenster festgelegt werden, ob dieser durch Interferenz beeinflusst ist oder nicht. Wenn beispielsweise das Ähnlichkeitsmaß angibt, dass die Abtastwerte zueinander eine große Streuung bzw. eine große Abweichung voneinander aufweisen, kann davon ausgegangen werden, dass zumindest einer der Abtastwerte in dem Fenster durch Interferenz beeinflusst ist. Falls die Streuung der Abtastwerte untereinander verhältnismäßig gering ist, kann davon ausgegangen werden, dass die Abtastwerte in dem Fenster nicht von Interferenz beeinflusst werden.

Zur Detektion der Interferenz wird der Radarsensor bzw. die Recheneinrichtung des Radarsensors standardmäßig in einem Normalbetrieb betrieben. Hierbei wird das Fenster entlang der Reihe von Abtastwerten derart verschoben, dass das Fenster entlang der Reihe jeweils um zumindest zwei Abtastwerte verschoben wird. Das Fenster wird also zwischen den Detektionszyklen um zumindest zwei Abtastwerte verschoben. Vorliegend wird also nicht für jeden Abtastwert das Ähnlichkeitsmaß bzw. die lokale Varianz bestimmt. Dadurch, dass das Fenster nicht jeweils um einen Abtastwert verschoben wird, erfolgt quasi eine Unterabtastung des Empfangssignals. Zur Berechnung des Ähnlichkeitsmaßes stehen aber grundsätzlich alle Abtastwerte zur Verfügung. Auf diese Weise kann die Zeitkomplexität bei der Berechnung des Ähnlichkeitsmaßes mittels der Recheneinrichtung verringert werden.

Es wird eine Mehrzahl von Detektionszyklen durchgeführt und ein Anteil der Detektionszyklen der Mehrzahl von Detektionszyklen wird ermittelt, bei welchem der zumindest eine Abtastwert in dem Fenster durch Interferenz beeinflusst ist. Mit anderen Worten wird eine Mehrzahl von zeitlich aufeinanderfolgenden Detektionszyklen durchgeführt, bei denen jeweils das Ähnlichkeitsmaß der Abtastwerte in dem Fenster bestimmt wird. Vorliegend wird die Anzahl oder der Anteil der Detektionszyklen der Mehrzahl von Detektionszyklen ermittelt, bei welchem der zumindest eine Abtastwert im Fenster durch Interferenz beeinflusst wird. Mit anderen Worten wird der Anteil der Detektionszyklen bestimmt, bei denen der zumindest eine Abtastwert den ersten Interferenzwert aufweist. Somit kann auf einfache und zuverlässige Weise ermittelt werden, bei wie vielen Detektionszyklen Interferenz vorliegt. Dabei kann es auch vorgesehen sein, dass der Anteil von Abtastwerten bestimmt wird, bei denen Interferenz vorliegt. Es kann also untersucht werden, welchem Anteil der Abtastwerte der erste Interferenzwert zugeordnet ist.

Erfindungsgemäß wird eine Anzahl von Abtastwerten, um welche das Fenster entlang der Reihe verschoben wird, in Abhängigkeit von dem ermittelten Anteil bestimmt. Wenn der Anteil an Detektionszyklen, in denen Interferenz festgestellt wird, beispielsweise einen vorbestimmten Schwellenwert überschreitet, kann die Anzahl an Abtastwerten, um welche das Fenster verschoben wird, verringert werden. Andererseits kann die Anzahl erhöht werden, falls nur in wenigen Detektionszyklen Interferenz bestimmt wurde. Somit kann die Verschiebung des Fensters in Abhängigkeit von der momentanen Interferenz-Situation adaptiert werden. Hierbei kann es auch vorgesehen sein, dass die vorbestimmte Anzahl der Abtastwerte, die das Fenster umfasst, in Abhängigkeit von dem ermittelten Anteil angepasst wird. Somit kann alternativ oder zusätzlich die Fensterbreite an die aktuelle Interferenz-Situation angepasst werden. Durch die Anpassung der Anzahl von Abtastwerten, um welche das Fenster verschoben wird, kann quasi die Abtastung des Empfangssignals situationsgerecht angepasst werden.

In einer Ausführungsform wird mittels des Radarsensors ein Sendesignal ausgesendet und anhand des von einem Objekt in einem Umgebungsbereich des Kraftfahrzeugs reflektierten Sendesignals das Empfangssignal bestimmt. Das Empfangssignal wird zum Bereitstellen einer Reihe der Abtastwerte mit der vorbestimmten Abtastfrequenz abgetastet.

Bevorzugt wird der zumindest eine Abtastwert der Abtastwerte in dem Fenster ein erster Interferenzwert zugeordnet, falls festgestellt wird, dass dieser von Interferenz beeinflusst ist, und dem zumindest einen Abtastwert wird ein zweiter Interferenzwert zugeordnet, falls festgelegt wird, dass dieser von Interferenz unbeeinflusst ist. Das Ähnlichkeitsmaß kann für die Abtastwerte in dem Fenster bestimmt werden. Anhand des Ähnlichkeitsmaßes kann bestimmt werden, ob die Abtastwerte in dem Fenster von Interferenz betroffen sind oder nicht. Falls das Ähnlichkeitsmaß beispielsweise einen Schwellenwert überschreitet, kann davon ausgegangen werden, dass Interferenz vorliegt. Falls Interferenz vorliegt, kann dem zumindest einen der Abtastwerte ein erster Interferenzwert zugeordnet werden. Dieser erste Interferenzwert kann beispielsweise den Wert 1 aufweisen. Falls sich bei der Ermittlung des Ähnlichkeitsmaßes ergibt, dass das Ähnlichkeitsmaß unterhalb des Schwellenwertes liegt, kann dem zumindest einen der Abtastwerte ein zweiter Interferenzwert zugeordnet werden, der beispielsweise den Wert 0 aufweist. Somit kann der zumindest eine Abtastwert durch den Interferenzwert binär bewertet werden. Insbesondere wird der erste oder der zweite Interferenzwert dem Abtastwert zugeordnet, welcher sich in der Mitte des Fensters befindet.

In einer Ausführungsform wird zumindest einem weiteren Abtastwert der Abtastwerte in dem Fenster derjenige Interferenzwert zugeordnet, welcher dem zumindest einen der Abtastwerte zugeordnet wird. Wenn dem zumindest einen Abtastwert der erste Interferenzwert zugeordnet wird, kann also dem weiteren Abtastwert auch der erste Interferenzwert zugeordnet werden. In gleicher Weise kann für den Fall, dass dem zumindest einen Abtastwert der zweite Interferenzwert zugeordnet wird, dem weiteren Abtastwert auch der zweite Interferenzwert zugeordnet werden. Dabei kann es auch vorgesehen sein, dass den beiden weiteren Abtastwerten, die neben dem zumindest einen Abtastwert angeordnet sind, der gleiche Interferenzwert zugeordnet wird, wie dem zumindest einen Abtastwert. Dies eignet sich insbesondere, wenn das Fenster jeweils um drei Abtastwerte verschoben wird. Somit kann den Abtastwerten, denen ansonsten kein Interferenzwert zugeordnet wird, der Interferenzwert des benachbarten Abtastwertes zugeordnet werden. Somit können alle Abtastwerte bei der weiteren Bearbeitung berücksichtigt werden.

Weiterhin ist es vorteilhaft, wenn die Recheneinrichtung in einem Analysebetrieb betrieben wird, in welchem das Fenster entlang der Abtastwerte um nur einen Abtastwert verschoben wird, falls der Anteil einen vorbestimmten Schwellenwert unterschreitet. Interferenz tritt üblicherweise auf, wenn das Radarsignal eines weiteren Fahrzeugs auf den Radarsensor des Kraftfahrzeugs bzw. das Ego-Fahrzeugs trifft. Der vorbestimmte Schwellenwert kann beispielsweise so gewählt werden, dass bei dessen Überschreiten üblicherweise ein deutlicher Einfluss von Interferenz in dem Empfangssignal vorherrschend ist. Dieser Zustand kann auch als Heavy Interference bezeichnet werden. In diesem kann die Recheneinrichtung von dem Normalbetrieb in den Analysebetrieb versetzt werden, in dem das Fenster jeweils nur um einen Abtastwert verschoben wird. Falls der ermittelte Anteil den vorbestimmten Schwellenwert wieder unterschreitet, kann die Recheneinrichtung wieder in dem Normalbetrieb betrieben werden. Somit kann die Interferenz in dem Analysebetrieb quasi mit einer höheren Abtastrate betrachtet werden und somit die Interferenz genauer untersucht werden.

Bevorzugt wird mit dem Radarsensor in einem Messzyklus eine Mehrzahl von Teilbereichen eines azimutalen Sichtfelds erfasst und die Mehrzahl von Detektionszyklen wird für jeden der Teilbereiche durchgeführt. Der Radarsensor ist insbesondere als Frequenzmodulations-Dauerstrich-Radarsensor (FMCW) ausgebildet. Der Radarsensor weist einen vorbestimmten azimutalen Erfassungsbereich auf, der in Teilbereiche unterteilt ist. Diese Teilbereiche werden der Reihe nach mit dem Radarsensor bestrahlt. Zu diesem Zweck kann die Hauptkeule der Sendeantenne elektronisch in Azimutrichtung verschwenkt werden. Alternativ dazu kann die Hauptkeule der Empfangsantenne elektronisch in Azimutrichtung verschwenkt werden. Es kann auch vorgesehen sein, dass die Hauptkeule der Sendeantennen und die Hauptkeule der Empfangsantenne verschwenkt werden. Dabei können für jeden der Teilbereiche eine Mehrzahl von Detektionszyklen durchgeführt werden. Somit kann beispielsweise festgestellt werden, ob in einem oder mehreren der Teilbereiche Interferenz vorliegt.

Bevorzugt wird für jeden Teilbereich der Mehrzahl von Teilbereichen der Anteil der Detektionszyklen der Mehrzahl von Detektionszyklen ermittelt, bei welchen der zumindest eine Abtastwert in dem Fenster durch Interferenz beeinflusst ist. Somit kann bestimmt werden, in welchem Teilbereich Interferenz vorliegt. Der Anteil kann auch für die Detektionszyklen bestimmt werden, bei denen der zumindest eine Abtastwert nicht durch Interferenz beeinflusst ist. Wenn beispielsweise in einem oder in zwei Teilbereichen Interferenz festgestellt wird, kann es der Fall sein, dass das Sendesignal des Radarsensors beispielsweise von Verkehrszeichen reflektiert wird. Diese Reflexion bewirkt Interferenz. Falls beispielsweise alle der Teilbereiche von Interferenz betroffen sind, kann es der Fall sein, dass das Radarsignal mit dem Sendesignal eines weiteren Fahrzeugs interferiert. Auf diese Weise kann anhand der Auswertung der einzelnen Teilbereiche die Interferenz differenziert werden.

In einer weiteren Ausgestaltung wird die Mehrzahl von Detektionszyklen bei mehreren zeitlich aufeinanderfolgenden Messzyklen durchgeführt. So kann beispielsweise in dem Fall, in dem in einer vorbestimmten Anzahl der Teilbereiche Interferenz festgestellt wird, bestimmt werden, ob dies auch bei zuvor oder nachfolgend durchgeführten Messzyklen festgestellt wird. Somit kann beispielsweise ermittelt werden, ob die Interferenz nur vorübergehend vorliegt oder für eine längere zeitliche Dauer vorhanden ist. Auf diese Weise kann die Interferenz genauer charakterisiert werden.

In einer bevorzugten Ausführungsform wird das Fenster in dem Normalbetrieb der Recheneinrichtung entlang der Reihe von Abtastwerten um drei Abtastwerte verschoben. Das Fenster kann beispielsweise fünf Abtastwerte umfassen. In diesem Fall kann das Empfangssignal quasi mit einer Unterabtastung, welche dem Faktor von etwa 2,8 entspricht, untersucht werden. Hierbei kann davon ausgegangen werden, dass gemäß dem Stand der Technik, wenn also das Fenster jeweils um einen Abtastwert verschoben wird, je nach Betrieb des Radarsensors das Signal mit einem Faktor zwischen ca. 1,08 und ca. 2,67 überabgetastet wird.

Gemäß einer Ausführungsform ist eine Recheneinrichtung für ein Fahrerassistenzsystem für ein Kraftfahrzeug vorgesehen, welche zum Durchführen eines Verfahrens nach einem der vorhergehenden Ansprüche ausgelegt ist. Bei der Recheneinrichtung kann es sich beispielsweise um einen programmierbaren Rechner wie etwa einen digitalen Signalprozessor (DSP), Mikrocontroller oder dergleichen handeln. Demgemäß kann ein Computerprogramm vorgesehen werden, das beispielsweise auf einem Speichermedium (RAM, ROM, Flash-Speicher) abgelegt ist, wobei das Programm zum Ausführen des hier beschriebenen Verfahrens programmiert ist, wenn es auf dem Rechner ausgeführt wird. Insbesondere kann das Programm auf der Recheneinrichtung ausgeführt werden.

Ein erfindungsgemäßes Fahrerassistenzsystem für ein Kraftfahrzeug umfasst eine Recheneinrichtung, welche zum Durchführen eines erfindungsgemäßen Verfahrens ausgelegt ist.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Fahrerassistenzsystem, für das erfindungsgemäße Kraftfahrzeug sowie für das erfindungsgemäße Computerprogrammprodukt.

Weitere Merkmale der Erfindung ergeben sich aus den Ansprüchen, den Figuren und der Figurenbeschreibung. Alle vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung zu verlassen.

Die Erfindung wird nun anhand einzelner bevorzugter Ausführungsbeispiele sowie unter Bezugnahme auf die beigefügten Zeichnungen näher erläutert.

Dabei zeigen:
- Fig. 1: in schematischer Darstellung ein Kraftfahrzeug mit einem Fahrerassistenzsystem gemäß einer Ausführungsform der vorliegenden Erfindung;
- Fig. 2: eine beispielhafte Darstellung von Abtastwerten eines Empfangssignals eines Radarsensors, über welche zur Detektion von Interferenz ein Fenster geschoben wird;
- Fig. 3: ein Flussdiagramm eines Verfahrens gemäß einer Ausführungsform der Erfindung zur Detektion der Interferenz in dem Empfangssignal;
- Fig. 4: einen zeitlichen Verlauf des Empfangssignals des Radarsensors, wobei das Empfangssignal nicht von Interferenz beeinflusst ist;
- Fig. 5: den zeitlichen Verlauf des Empfangssignals, wobei das Empfangssignal nur zeitweise von Interferenz beeinflusst ist; und
- Fig. 6: den zeitlichen Verlauf des Empfangssignals, wobei das Empfangssignal durchgehend Interferenz beeinflusst ist.

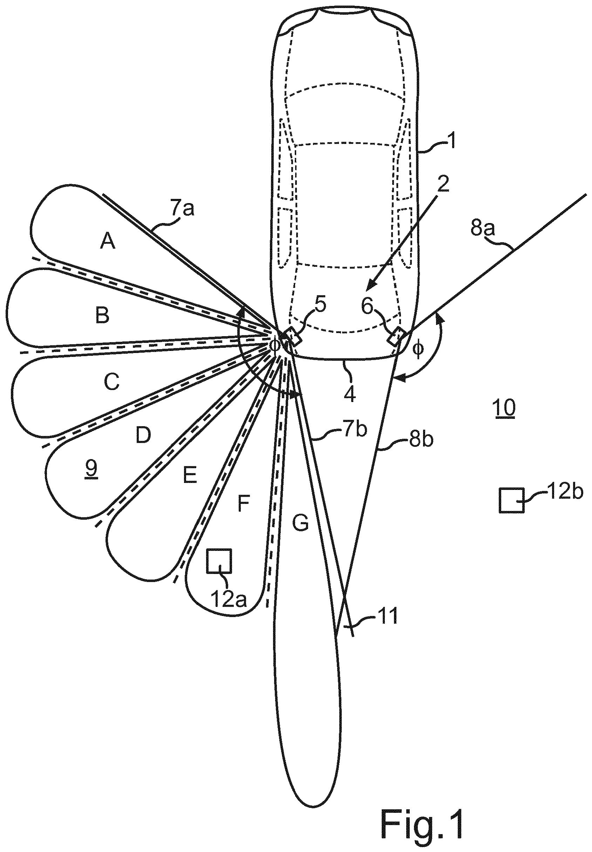

Fig. 1 zeigt eine schematische Darstellung eines Kraftfahrzeugs 1 in einer Draufsicht. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2, welches den Fahrer beim Führen des Kraftfahrzeugs 1 unterstützt. Das Fahrerassistenzsystem 2 kann beispielsweise ein Totwinkelerkennungssystem und/oder ein Spurwechselassistent und/oder eine Rückwärtsausparkhilfe und/oder ein Türöffnerassistent und/oder ein Aufmerksamkeitserkennungssystem sein.

Das Fahrerassistenzsystem 2 umfasst in dem vorliegenden Ausführungsbeispiel zwei Radarsensoren 5 und 6, welche hinter einem hinteren Stoßfänger 4 des Kraftfahrzeugs 1 angeordnet sind. Der erste Radarsensor 5 ist in einem linken hinteren Eckbereich des Kraftfahrzeugs 1 angeordnet, während der zweite Radarsensor 6 in einem rechten hinteren Eckbereich angeordnet ist. Beide Radarsensoren 5, 6 befinden sich hinter dem Stoßfänger 4 und sind außen nicht sichtbar.

Die Radarsensoren 5 und 6 sind in dem vorliegenden Ausführungsbeispiel als Frequenzmodulations-Dauerstrich-Radarsensoren (FMCW) ausgebildet. Die Radarsensoren 5, 6 besitzen jeweils einen azimutalen Erfassungsbereich Φ, welcher in Fig. 1 durch die zwei Linien 7a, 7b (für den linken Radarsensor 5) bzw. 8a, 8b (für den rechten Radarsensor 6) begrenzt ist. Der azimutale Erfassungswinkel Φ beträgt beispielsweise 150°. Durch diesen Winkel Φ ist jeweils ein Sichtfeld 9 bzw. 10 des jeweiligen Radarsensors 5, 6 in Azimutrichtung und somit in horizontaler Richtung definiert. Die Sichtfelder 9, 10 können sich auch gegenseitig überlappen, so dass ein Überlappungsbereich 11 gegeben ist.

Jeder der Radarsensoren 5, 6 beinhaltet eine integrierte Recheneinrichtung, die beispielsweise einen digitalen Signalprozessor (DSP) umfasst. Die Recheneinrichtung ist dazu ausgelegt, die Radarsensoren 5, 6 anzusteuern und die Empfangssignale zu verarbeiten und auszuwerten. Alternativ kann aber auch für beide Radarsensoren 5, 6 eine Recheneinrichtung vorgesehen sein, welche dann die Empfangssignale 13 der beiden Radarsensoren 5, 6 verarbeitet. In diesem Fall kann die Recheneinrichtung beispielsweise durch ein Steuergerät des Kraftfahrzeugs 1 gebildet sein.

In ihren jeweiligen Sichtfeldern 9, 10 können die Radarsensoren 5, 6 fahrzeugexterne Objekte 12a, 12b detektieren. Vorliegend ist links ein Objekt 12a und rechts ein Objekt 12b dargestellt. Insbesondere können die Radarsensoren 5, 6 die Entfernung der Objekte 12a, 12b von den jeweiligen Radarsensoren 5, 6 sowie jeweils den Zielwinkel und die Relativgeschwindigkeit der Objekte 12a bzw. 12b bezüglich des Kraftfahrzeugs 1 bestimmen.

Die Funktion des Radarsensors 5, 6 wird nachfolgend anhand des Radarsensors 5 beschrieben. Der Radarsensor 6 weist die gleiche Funktion auf. Wie in Fig. 1 dargestellt, kann der Radarsensor 5 verschiedene Teilbereiche A, B, C, D, E, F, G des azimutalen Sichtfelds 9 nacheinander bestrahlen. Diese Teilbereiche A-G stellen Winkelbereiche dar, wobei zur Erfassung der Teilbereiche A-G nacheinander beispielsweise eine Sendequelle der Sendeantenne des Radarsensors 5 elektronisch in Azimutrichtung verschwenkt wird, nämlich nach dem Phase-Array-Prinzip. Die unterschiedlichen Ausrichtungen der Sendekeule sind in Fig. 1 für die unterschiedlichen Teilbereiche A-G schematisch angedeutet. Die Empfangsantennen des Radarsensors 5 können in Azimutrichtung insgesamt eine breite Empfangscharakteristik aufweisen, mit welcher das gesamte azimutale Sichtfeld 9 abgedeckt wird. Alternativ dazu können schmale Empfangswinkelbereiche in Verbindung mit breiten Sendekeulen realisiert werden. Die Anzahl der Teilbereiche A-G ist in Fig. 1 lediglich beispielhaft dargestellt und kann je nach Ausführungsform unterschiedlich sein.

Die Funktionsweise des Radarsensors ist wie folgt: In einem Messzyklus des Radarsensors 5 wird die Hauptkeule der Sendeantenne einmal vom Teilbereich A bis hin zum Teilbereich G schrittweise verschwenkt, so dass die Teilbereiche A-G einer nach dem anderen beleuchtet werden. Für jeden Teilbereich A-G wird dabei jeweils ein Sendesignal ausgesendet, das eine Sequenz von frequenzmodulierten Chirpsignalen umfasst. Zunächst wird das Sendesignal für den Teilbereich A ausgesendet. Nach einer vorgegebenen Sendepause wird dann das Sendesignal für den Teilbereich B ausgesendet und so weiter. Wie aus Fig. 1 hervorgeht, weist der Radarsensor 5 für den Teilbereich G eine größere Reichweite auf als für die übrigen Teilbereiche A-F auf. Dies kann beispielsweise dadurch erreicht werden, dass für den Teilbereich G die ausgesendete Sequenz mehr Chirpsignale als die übrigen Bereiche A-F aufweist. Während für die Teilbereiche A-F beispielsweise 16 Chirpsignale innerhalb der jeweiligen Sequenz ausgesendet werden, werden für den Teilbereich G beispielsweise insgesamt 64 Chirpsignale innerhalb der Sequenz ausgesendet.

In jedem der Teilbereiche A-G wird ein Empfangssignal mit dem Radarsensor 5 ermittelt. Dabei werden zum Bestimmen der jeweiligen Empfangssignale die Teilbereiche A-G separat voneinander verarbeitet und ausgewertet. Zum Bestimmen des jeweiligen Empfangssignals 13 wird das von dem Objekt 12a reflektierte Sendesignal mit dem Radarsensor 5 empfangen. Mit der Recheneinrichtung des Radarsensors 5 wird dann das von dem Objekt 12a reflektierte Sendesignal mit dem Radarsensor 5 empfangen. Mit der Recheneinrichtung des Radarsensors 5 wird dann das von dem Objekt 12a reflektierte Sendesignal mit dem ausgesendeten Sendesignal gemischt. Auf diese Weise enthält das Empfangssignal 13 eine Information über die Verschiebung des frequenzmodulierten Chirpsignals. Anhand dieser Verschiebung kann der Abstand zu dem Objekt 12a, die Relativgeschwindigkeit des Objekts 12a und/oder ein Zielwinkel zwischen einer Verbindungslinie zu dem Objekt 12a und einer Referenzlinie, beispielsweise der Fahrzeuglängsachse, bestimmt werden.

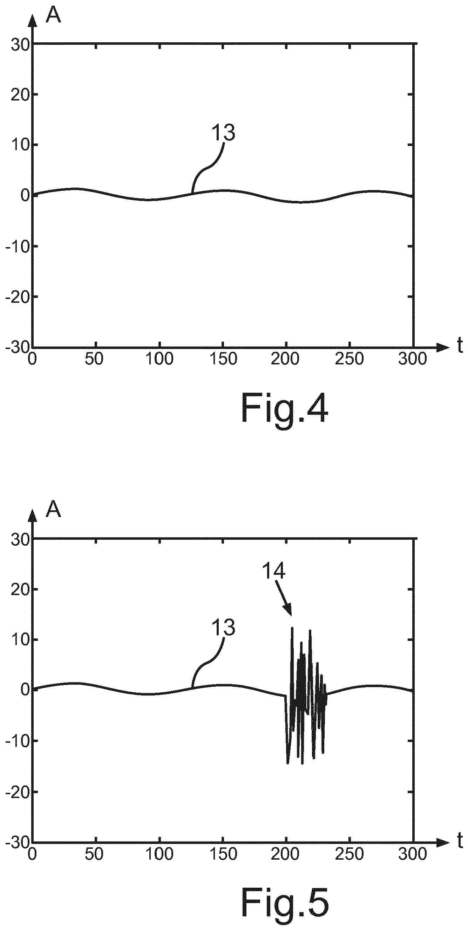

Zudem soll untersucht werden, ob die Empfangssignale 13 zusätzlich zu diesem Nutzsignal von dem Zielobjekt eine Interferenz bzw. ein Interferenzsignal erfasst. Eine solche Interferenz kann beispielsweise von anderen Radarsensoren, beispielsweise dem anderen Radarsensor 6 oder aber von fahrzeugexternen Radarsensoren stammen. Die Interferenzen können auch von Reflexionen des Sendesignals stammen. Zur Verdeutlichung zeigt Fig. 4 den zeitlichen Verlauf des Empfangssignals 13 in Abhängigkeit von der Zeit t. In Fig. 4 ist die Amplitude A des Empfangssignals 13 in Abhängigkeit von der Zeit t aufgetragen. Vorliegend ist zu erkennen, dass das Empfangssignal 13 eine im Wesentlichen sinusförmige Schwingung aufweist. Anhand der Frequenz dieser Schwingung kann beispielsweise der Abstand zu dem Objekt 12a bestimmt werden. Das Empfangssignal 13 gemäß Fig. 4 ist nicht durch Interferenzen beeinflusst.

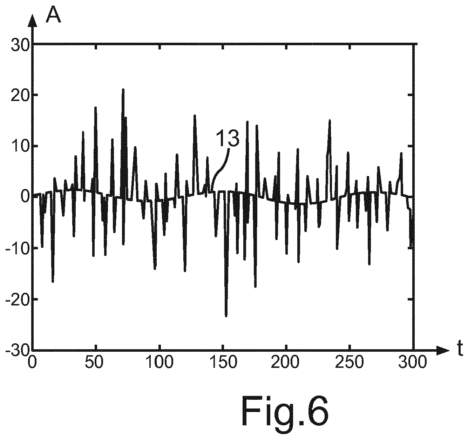

Im Vergleich hierzu zeigt Fig. 5 den zeitlichen Verlauf des Empfangssignals 13, das durch Interferenz beeinflusst ist. Vorliegend ist das Empfangssignal 13 in dem Zeitbereich 14 durch Interferenz beeinflusst. Dies ist deutlich durch die Schwankung des Empfangssignals 13 zu erkennen. Fig. 6 zeigt ein weiteres Beispiel des zeitlichen Verlaufs des Empfangssignals 13, bei dem das Empfangssignal 13 für den kompletten gezeigten Zeitausschnitt von Interferenz beeinflusst ist. Ein solcher Zustand kann auch als Heavy Interference bezeichnet werden. Eine solche Art der Interferenz liegt beispielsweise vor, wenn das Radarsignal von einem anderen Radarsensor empfangen wird.

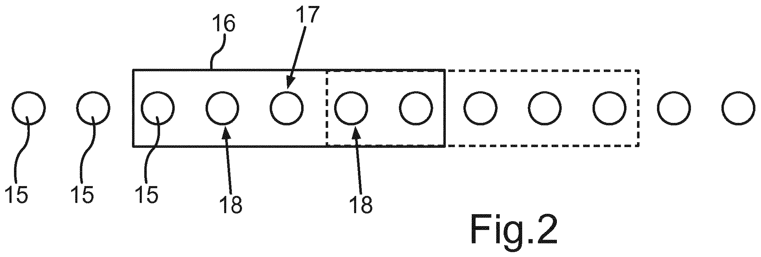

Das Empfangssignal 13 von einem Analog-Digital-Wandler mit einer vorbestimmten Abtastfrequenz abgetastet. In Folge der Abtastung wird eine Reihe von Abtastwerten 15 bereitgestellt. Dies ist stark vereinfacht in Fig. 2 dargestellt. Hier sind die Abtastwerte 15 als Kreisen dargestellt. Zur Detektion der Interferenz wird die Recheneinrichtung in einem Normalbetrieb betrieben, in dem mehrere zeitlich aufeinanderfolgende Detektionszyklen durchgeführt werden. Dabei wird ein Fenster 16 vorgegeben, das eine vorbestimmte Anzahl von Abtastwerten 15 umfasst. Die durchgezogene Linie verdeutlicht die Position des Fensters während eines ersten Detektionszyklus. In dem vorliegenden Ausführungsbeispiel umfasst das Fenster 16 fünf Abtastwerte 15. Für die fünf Abtastwerte 15 in dem Fenster 16 wird ein Ähnlichkeitsmaß bestimmt. Dieses Ähnlichkeitsmaß beschreibt eine Abweichung der Abtastwerte 15 zueinander. Mit anderen Worten beschreibt das Ähnlichkeitsmaß eine lokale Varianz der Abtastwerte 15 in dem Fenster 16.

Falls das Ähnlichkeitsmaß einen vorbestimmten Schwellenwert überschreitet, kann davon ausgegangen werden, dass die Abtastwerte 15 eine hohe Streuung zueinander aufweisen und somit Interferenz vorliegt. In diesem Fall kann ein erster Interferenzwert bestimmt werden, der dann zumindest einem bzw. einem ersten Abtastwert 17 der Abtastwerte 15 zugeordnet wird. Vorliegend ist der erste Abtastwert 17 mittig in dem Fenster 16 angeordnet. Der erste Interferenzwert kann beispielsweise den Wert 1 aufweisen. Für den Fall, dass das Ähnlichkeitsmaß den vorbestimmten Schwellenwert unterschreitet, kann dem ersten Abtastwert 17 der Wert 0 zugeordnet werden. Dabei ist es zudem vorgesehen, dass der erste Interferenzwert, der dem ersten Abtastwert 17 zugeordnet wird, zumindest einem weiteren bzw. zumindest einem zweiten Abtastwert 18 zugeordnet wird. Vorliegend wird der Interferenzwert, der dem ersten Abtastwert 17 zugeordnet wird, auch den zweiten Abtastwerten 18 zugeordnet, die vor und nach dem ersten Abtastwert 17 in der Reihe angeordnet sind. Mit anderen Worten wird den zu dem ersten Abtastwert 17 benachbarten Abtastwerten 18 der gleiche Interferenzwert zugeordnet wie dem ersten Abtastwert 17.

In einem nachfolgenden Detektionszyklus wird das Fenster 16 entlang der Reihe von Abtastwerten 15 verschoben. Dabei wird das Fenster 16 derart entlang der Abtastwerte 15 verschoben, dass es zumindest um zwei Abtastwerte 15 verschoben wird. In dem vorliegenden Ausführungsbeispiel wird das Fenster 16 um drei Abtastwerte 15 verschoben. Die Position des Fensters 16 zu einem nachfolgenden Detektionszyklus ist vorliegend durch die gestrichelte Linie verdeutlicht. Somit wird vorliegend in einem Normalbetrieb der Recheneinrichtung nicht jeder der Abtastwerte bei der Bestimmung des Ähnlichkeitsmaßes berücksichtigt. Es liegt quasi eine Unterabtastung des Empfangssignals 13 vor.

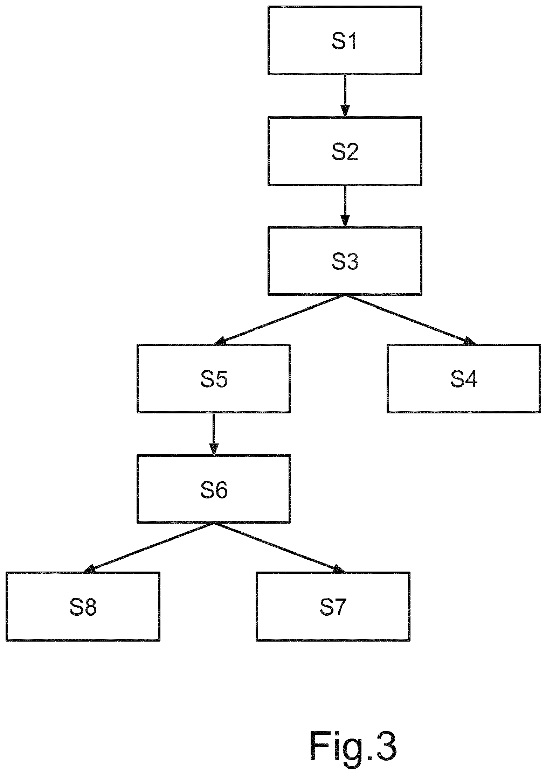

Fig. 3 zeigt ein schematisches Ablaufdiagramm eines Verfahrens zur Detektion der Interferenz in dem Empfangssignal 13. In einem Schritt S1 wird das Verfahren gestartet. Dabei wird ein Messzyklus durchgeführt, in dem in jedem der Teilbereiche A-G das Empfangssignal 13 bestimmt wird. Dabei wird für jeden der Teilbereiche A-G eine Mehrzahl von Detektionszyklen durchgeführt. In jedem Detektionszyklus wird dem jeweiligen ersten Abtastwert 17 ein Interferenzwert in Abhängigkeit von dem Ähnlichkeitsmaß zugeordnet. Zudem wird benachbarten Abtastwerten 18 der gleiche Interferenzwert zugeordnet.

In einem Schritt S2 wird ein Anteil der Detektionszyklen für jeden der Teilbereiche A-G ermittelt, bei dem Interferenz festgestellt wird. In einem nachfolgenden Schritt S3 wird für jeden der Teilbereiche A-G überprüft, ob für den jeweiligen Teilbereich A-G der ermittelte Anteil der Detektionszyklen, bei denen Interferenz festgestellt wird, größer als ein Schwellenwert ist, der beispielsweise 40 % beträgt. Ist die Anzahl der Teilbereiche A-G, bei denen der Schwellenwert überschritten wird, kleiner als drei, wird das Verfahren in einem Schritt S4 fortgesetzt. In diesem Fall wird die Recheneinrichtung weiterhin im Normalbetrieb betrieben.

Ist die Anzahl der Teilbereiche A-G, bei denen der Schwellwert überschritten wird, größer als drei, wird das Verfahren in einem Schritt S5 fortgesetzt. In dem Schritt S5 wird der Messzyklus entsprechend markiert. Dies soll darauf hinweisen, dass in dem Messzyklus Interferenzen, insbesondere eine schwerwiegende Interferenz, wie sie beispielsweise in Fig. 6 gezeigt ist, vorliegt.

In einem nachfolgenden Schritt S6 wird eine vorbestimmte Anzahl von Messzyklen überprüft, die zu vorhergehenden Zeitpunkten durchgeführt wurden. Hier können beispielsweise vier Messzyklen überprüft werden. Wenn weniger als zwei dieser letzten vier Messzyklen markiert sind, wird das Verfahren in einem Schritt S7 fortgesetzt. Hierbei wird die Recheneinrichtung des Radarsensors 5 in dem Normalbetrieb betrieben. Falls zwei oder mehr der letzten vier Messzyklen ebenfalls markiert sind, wird das Verfahren in dem Schritt S8 fortgeführt. In diesem Fall wird die Recheneinrichtung des Radarsensors 5 in dem Analysebetrieb betrieben. In diesem Fall wird das Fenster 16 jeweils um einen Abtastwert 15 verschoben. Die Einstellung der Anzahl der Abtastwerte 15, um welche das Fenster 16 verschoben wird, kann beispielsweise mit einer entsprechenden Variable eingestellt werden.

Mit dem Verfahren kann das Empfangssignal 13 also bedarfsgerecht abgetastet werden. In dem Normalbetrieb werden durch die Verschiebung des Fensters 16 nicht alle Abtastwerte 15 zur Bestimmung des Ähnlichkeitsmaßes herangezogen. Wenn Interferenz erkannt wird, kann die Interferenz in dem Analysebetrieb genauer untersucht werden. Somit kann die Recheneinrichtung in Abhängigkeit von der Interferenz betrieben werden. Auf diese Weise kann die Recheneinrichtung so betrieben werden, dass die Zeitkomplexität bei der Berechnung des Ähnlichkeitsmaßes verringert wird.

## Patentansprüche

1. Verfahren zur Detektion einer Interferenz in einem Empfangssignal (13) eines Radarsensors (5, 6) eines Kraftfahrzeugs (1) mittels einer Recheneinrichtung, bei welchem eine Reihe von Abtastwerten (15) ermittelt wird, wobei die Abtastwerte (15) das mit einer vorbestimmten Abtastfrequenz abgetastete Empfangssignal (13) charakterisieren, ein Fenster (16) vorbestimmt wird, welches eine vorbestimmte Anzahl von Abtastwerten (15) der Reihe umfasst und welches entlang der Reihe an unterschiedliche Positionen verschoben wird, wobei an jeder Position des Fensters (16) ein Detektionszyklus durchgeführt wird, bei dem ein Ähnlichkeitsmaß, welches eine Abweichung der Abtastwerte (15) in dem Fenster (16) zueinander beschreibt, bestimmt wird und für zumindest einen Abtastwert (17) der Abtastwerte (15) in dem Fenster (16) anhand des Ähnlichkeitsmaßes festgelegt wird, ob dieser durch Interferenz beeinflusst ist, wobei eine Mehrzahl von Detektionszyklen durchgeführt wird,
**dadurch gekennzeichnet, dass**
in einem Normalbetrieb der Recheneinrichtung das Fenster (16) entlang der Reihe jeweils um zumindest zwei Abtastwerte (15) verschoben wird, dass ein Anteil der Detektionszyklen der Mehrzahl von Detektionszyklen ermittelt wird, bei welchen der zumindest eine Abtastwert (15) in dem Fenster (16) durch Interferenz beeinflusst ist, und dass eine Anzahl von Abtastwerten (15), um welche das Fenster (16) entlang der Reihe verschoben wird, in Abhängigkeit von dem ermittelten Anteil bestimmt wird.

2. Verfahren nach Anspruch 1,
**dadurch gekennzeichnet, dass**
dem zumindest einem Abtastwert (17) der Abtastwerte (15) in dem Fenster (16) ein erster Interferenzwert zugeordnet wird, falls festgelegt wird, dass dieser von Interferenz beeinflusst ist, und dem zumindest einen Abtastwert (17) ein zweiter Interferenzwert zugeordnet wird, falls festgelegt wird, dass dieser von Interferenz unbeeinflusst ist.

3. Verfahren nach Anspruch 2,
**dadurch gekennzeichnet, dass**
zumindest einem weiteren Abtastwert (18) der Abtastwerte (15) in dem Fenster (16) derjenige Interferenzwert zugeordnet wird, welcher dem zumindest einen Abtastwert (17) zugeordnet wird.

4. Verfahren nach einem der vorhergehenden Ansprüche,
**dadurch gekennzeichnet, dass**
die Recheneinrichtung in einem Analysebetrieb betrieben wird, in welchem das Fenster (16) entlang der Reihe um nur einen Abtastwert (15) verschoben wird, falls der ermittelte Anteil einen vorbestimmten Schwellenwert überschreitet.

5. Verfahren nach einem der vorhergehenden Ansprüche,
**dadurch gekennzeichnet, dass**
mit dem Radarsensor (5, 6) in einem Messzyklus eine Mehrzahl von Teilbereichen (A-G) eines azimutalen Sichtfelds (9, 10) erfasst wird und die Mehrzahl von Detektionszyklen für jeden der Teilbereiche (A-G) durchgeführt wird.

6. Verfahren nach Anspruch 5,
**dadurch gekennzeichnet, dass**
für jeden Teilbereich (A-G) der Mehrzahl von Teilbereichen (A-G) der Anteil der Detektionszyklen der Mehrzahl von Detektionszyklen ermittelt wird, bei welchen der zumindest eine Abtastwert (15) in dem Fenster (16) durch Interferenz beeinflusst ist.

7. Verfahren nach Anspruch 5 oder 6,
**dadurch gekennzeichnet, dass**
die Mehrzahl von Detektionszyklen bei mehreren zeitlich aufeinanderfolgenden Messzyklen durchgeführt wird.

8. Verfahren nach einem der vorhergehenden Ansprüche,
**dadurch gekennzeichnet, dass**
das Fenster (16) in dem Normalbetrieb der Recheneinrichtung entlang der Reihe um drei Abtastwerte (15) verschoben wird.

9. Recheneinrichtung für ein Fahrerassistenzsystem (2) für ein Kraftfahrzeug (1), welche zum Durchführen eines Verfahrens nach einem der vorhergehenden Ansprüche ausgelegt ist.

10. Fahrerassistenzsystem (2) für ein Kraftfahrzeug (1) mit einer Recheinrichtung nach Anspruch 9.

11. Kraftfahrzeug (1) mit einem Fahrerassistenzsystem (2) nach Anspruch 10.

12. Computerprogrammprodukt, vorzugsweise ein Speichermedium, mit einem Computerprogramm, das dazu programmiert ist, ein Verfahren nach einem der Ansprüche 1 bis 8 auszuführen, wenn das Computerprogramm auf einem Rechner ausgeführt wird.

## Claims

1. Method for detecting interference in a reception signal (13) of a radar sensor (5, 6) of a motor vehicle (1) by means of a computing device, in which a series of samples (15) is determined, wherein the samples (15) characterize the reception signal (13) sampled at a predetermined sampling frequency, a window (16) is predetermined and comprises a predetermined number of samples (15) in the series and is shifted to different positions along the series, wherein a detection cycle is carried out at each position of the window (16), in which a degree of similarity which describes a discrepancy of the samples (15) in the window (16) with respect to one another is determined, and it is determined, for at least one sample (17) of the samples (15) in the window (16), on the basis of the degree of similarity, whether this sample is influenced by interference, wherein a plurality of detection cycles are carried out,
**characterized in that**
during normal operation of the computing device, the window (16) is shifted along the series by at least two samples (15) in each case, **in that** a proportion of the detection cycles of the plurality of detection cycles in which the at least one sample (15) in the window (16) is influenced by interference is determined, and **in that** a number of samples (15) by which the window (16) is shifted along the series is determined on the basis of the determined proportion.

2. Method according to Claim 1,
**characterized in that**
a first interference value is assigned to the at least one sample (17) of the samples (15) in the window (16) if it is determined that this sample is influenced by interference, and a second interference value is assigned to the at least one sample (17) if it is determined that this sample is not influenced by interference.

3. Method according to Claim 2,
**characterized in that**
that interference value which is assigned to the at least one sample (17) is assigned to at least one further sample (18) of the samples (15) in the window (16) .

4. Method according to one of the preceding claims,
**characterized in that**
the computing device is operated in an analytical mode in which the window (16) is shifted along the series by only one sample (15) if the determined proportion exceeds a predetermined threshold value.

5. Method according to one of the preceding claims,
**characterized in that**
a plurality of sections (A-G) of an azimuthal field of view (9, 10) are captured in a measurement cycle using the radar sensor (5, 6) and the plurality of detection cycles are carried out for each of the sections (A-G).

6. Method according to Claim 5,
**characterized in that**
the proportion of detection cycles of the plurality of detection cycles for which the at least one sample (15) in the window (16) is influenced by interference is determined for each section (A-G) of the plurality of sections (A-G).

7. Method according to Claim 5 or 6,
**characterized in that**
the plurality of detection cycles are carried out in a plurality of temporally successive measurement cycles.

8. Method according to one of the preceding claims,
**characterized in that**
the window (16) is shifted along the series by three samples (15) during normal operation of the computing device.

9. Computing device for a driver assistance system (2) for a motor vehicle (1), which is designed to carry out a method according to one of the preceding claims.

10. Driver assistance system (2) for a motor vehicle (1), having a computing device according to Claim 9.

11. Motor vehicle (1) having a driver assistance system (2) according to Claim 10.

12. Computer program product, preferably a storage medium, having a computer program which is programmed to carry out a method according to one of Claims 1 to 8 when the computer program is executed on a computer.

## Revendications

1. Procédé de détection d'une interférence dans un signal de réception (13) d'un capteur radar (5, 6) d'un véhicule automobile (1) au moyen d'un dispositif de calcul, dans lequel une série de valeurs d'échantillonnage (15) est déterminée, les valeurs d'échantillonnage (15) caractérisant le signal de réception (13) échantillonné à une fréquence d'échantillonnage prédéterminée, une fenêtre (16) étant prédéterminée qui comprend un nombre prédéterminé de valeurs d'échantillonnage (15) de la série et qui est déplacée suivant la série à des positions différentes, un cycle de détection étant effectué à chaque position de la fenêtre (16), lors duquel une mesure de similitude est déterminée qui décrit un écart des valeurs d'échantillonnage (15) dans la fenêtre (16) les unes par rapport aux autres, et il est établi à l'aide de la mesure de similitude pour au moins une valeur d'échantillonnage (17) des valeurs d'échantillonnage (15) dans la fenêtre (16) si celle-ci est affectée par des interférences, dans lequel une pluralité de cycles de détection est effectuée,
**caractérisé en ce qu'**en cas de fonctionnement normal du dispositif de calcul, la fenêtre (16) est déplacée suivant la série d'au moins deux valeurs d'échantillonnage (15) respectivement, **en ce qu'**un pourcentage des cycles de détection de la pluralité de cycles de détection est déterminé lors desquels ladite au moins une valeur d'échantillonnage (15) dans la fenêtre (16) est affectée par des interférences, et **en ce qu'**un nombre de valeurs d'échantillonnage (15) selon lequel la fenêtre (16) est déplacée suivant la série est déterminé en fonction du pourcentage déterminé.

2. Procédé selon la revendication 1,
**caractérisé en ce**
**qu'**une première valeur d'interférence est associée à ladite au moins une valeur d'échantillonnage (17) des valeurs d'échantillonnage (15) dans la fenêtre (16) s'il est établi que celle-ci est affectée par des interférences, et une deuxième valeur d'interférence est associée à ladite au moins une valeur d'échantillonnage (17) s'il est établi que celle-ci n'est pas affectée par des interférences.

3. Procédé selon la revendication 2,
**caractérisé en ce que**
la valeur d'interférence qui est associée à ladite au moins une valeur d'échantillonnage (17) est associée à une valeur d'échantillonnage supplémentaire (18) des valeurs d'échantillonnage (15) dans la fenêtre (16).

4. Procédé selon l'une quelconque des revendications précédentes,
**caractérisé en ce que**
le dispositif de calcul fonctionne dans un mode analyse dans lequel la fenêtre (16) est déplacée suivant la série d'une seule valeur d'échantillonnage (15) si le pourcentage déterminé dépasse une valeur seuil prédéterminée.

5. Procédé selon l'une quelconque des revendications précédentes,
**caractérisé en ce**
**qu'**une pluralité de zones partielles (A à G) d'un champ de vision azimutal (9, 10) est détectée par le capteur radar (5, 6) dans un cycle de mesure, et la pluralité de cycles de détection est effectuée pour chacune des zones partielles (A à G).

6. Procédé selon la revendication 5,
**caractérisé en ce que**
pour chaque zone partielle (A à G) de la pluralité de zones partielles (A à G), le pourcentage des cycles de détection de la pluralité de cycles de détection est déterminé dans lesquels ladite au moins une valeur d'échantillonnage (15) est affectée par des interférences dans la fenêtre (16).

7. Procédé selon la revendication 5 ou 6,
**caractérisé en ce que**
la pluralité de cycles de détection est effectuée dans le cas de plusieurs cycles de mesure se succédant dans le temps.

8. Procédé selon l'une quelconque des revendications précédentes,
**caractérisé en ce que**
la fenêtre (16), dans le mode normal du dispositif de calcul, est déplacée suivant la série de trois valeurs d'échantillonnage (15).

9. Dispositif de calcul pour un système d'assistance au conducteur (2) pour un véhicule automobile (1) et qui est conçu pour exécuter un procédé selon l'une quelconque des revendications précédentes.

10. Système d'assistance au conducteur (2) pour un véhicule automobile (1) muni d'un dispositif de calcul selon la revendication 9.

11. Véhicule automobile (1) muni d'un système d'assistance au conducteur (2) selon la revendication 10.

12. Produit de programme informatique, de préférence support de stockage, comprenant un programme informatique, qui est programmé pour exécuter un procédé selon l'une quelconque des revendications 1 à 8 lorsque le programme informatique est effectué sur un ordinateur.
